(19) **Europäisches Patentamt / European Patent Office / Office européen des brevets**

(11) **EP 1 522 141 B1**

(12) **EUROPEAN PATENT SPECIFICATION**

(45) Date of publication and mention
of the grant of the patent:
**14.11.2007 Bulletin 2007/46**

(21) Application number: **03718455.3**

(22) Date of filing: **30.04.2003**

(51) Int Cl.:
*H02P 27/06* *(2006.01)*     *H02P 25/02* *(2006.01)*

(86) International application number:
**PCT/US2003/012116**

(87) International publication number:
**WO 2004/001945 (31.12.2003 Gazette 2004/01)**

(54) **MOTOR CONTROL SYSTEM AND METHOD WITH ADAPTIVE CURRENT PROFILE**

MOTORSTEUERUNGSSYSTEM UND VERFAHREN MIT ADAPTIVEM STROMVERLAUF

SYSTEME ET PROCEDE DE COMMANDE DE MOTEUR AVEC UN PROFIL DE COURANT ADAPTATIF

(84) Designated Contracting States:
**AT BE BG CH CY CZ DE DK EE ES FI FR GB GR HU IE IT LI LU MC NL PT RO SE SI SK TR**

(30) Priority: **19.06.2002 US 173610**
**08.11.2002 US 290537**
**29.01.2003 US 353075**

(43) Date of publication of application:
**13.04.2005 Bulletin 2005/15**

(73) Proprietor: **Wavecrest Laboratories, LLC Michigan 48309 (US)**

(72) Inventors:
• **MASLOV, Boris, A.**
**Reston, VA 20191 (US)**
• **FEEMSTER, Matthew**
**Severna Park, MD 21146 (US)**
• **YUAN, Guohui**
**Gaithersburg, MD 20878 (US)**

(74) Representative: **HOFFMANN EITLE**
**Patent- und Rechtsanwälte**
**Arabellastrasse 4**
**81925 München (DE)**

(56) References cited:
WO-A-90/11641     JP-A- 11 285 288
US-A- 4 333 042     US-A- 5 034 675

## Description

## Field of the Invention

The present invention relates to control of electric motors, more particularly to implementation, individually, of a plurality of motor control schemes to effect associated stator current waveform profiles.

## Background

The above-identified copending patent applications describe the challenges of developing efficient electric motor drives. Electronically controlled pulsed energization of motor windings offers the prospect of more flexible management of motor characteristics. By control of pulse width, duty cycle, and switched application of an energy source to appropriate stator windings, greater functional versatility can be achieved. The use of permanent magnets in conjunction with such windings is advantageous in limiting current consumption.

In a vehicle drive environment, wherein power availability for a traction motor is limited to an on-board supply, it is highly desirable to attain a high torque output capability at minimum power consumption while maintaining high efficiency in all conditions of traction motor operation. Motor structural arrangements described in the copending applications contribute to these objectives. As described in those applications, electromagnet core segments may be configured as isolated magnetically permeable structures in an annular ring to provide increased flux concentration. Isolation of the electromagnet core segments permits individual concentration of flux in the magnetic cores, with a minimum of flux loss or deleterious transformer interference effects occurring from interaction with other electromagnet members.

The US 6,727,668 describes a control system for a multiphase motor that compensates for variations in individual phase circuit elements. A high degree of precision controllability is obtained with each phase control loop closely matched with its corresponding winding and structure. Successive switched energization of each phase winding is governed by a controller that generates signals in accordance with parameters associated with the respective stator phase components and selected driving algorithms. The phase windings are energized with current of sinusoidal waveform for high efficiency operation. The control system varies the output current to respond to, and accurately track, the user's torque command input.

The sinusoidal current waveform profile obtained with this commutation strategy can extend battery life through efficient operation. However, in vehicle driving operation there may be a need for torque capability in excess of that available from the most efficient control scheme. Typically, the power supply is rated for a maximum current discharge rate, for example, 10.0 amps. If the user of the system requests a torque command that correlates to this maximum current draw, then the motor torque output for a sinusoidal current waveform profile is limited, for example, to approximately 54.0 Nm in a motor with a configuration such as described above. In vehicle drive applications, torque input commands are associated by users with commands for change of speed. In typical driving operation, user torque requests are subject to wide variability with little, if any, long term predictability. A driver may demand higher acceleration or greater speed than the system can accommodate at maximum torque with a sinusoidal current waveform. Driving conditions, such as steep uphill grade or heavy vehicle load or the like, may impose other limitations on available speed and acceleration. Other non-vehicular applications may have similar high torque requirements.

The need thus exists for a motor control system that is capable of performing with high efficiency yet can deliver increased torque output when required by the user. The US 6,794,839 addresses this need by making available a plurality of motor control schemes for a motor drive, each of which can provide a unique current waveform profile. One of the motor control schemes may be selected by the user to obtain a current waveform profile that has the greatest capability to meet operating objectives. For example, a control scheme may be selected that yields high efficiency operation, such as a sinusoidal waveform, while another control scheme may be selected that provides higher torque, albeit with less operating efficiency. Selection among motor control schemes may be made in accordance with the user's needs or objectives with respect to torque and efficiency, or other factors, e.g., low torque ripple and noise, etc., at any particular time. A selected motor control scheme will be implemented to generate control signals to produce motor energization current having the associated waveform profile.

In a vehicle traction application, for example, user profile selection provides the driver of a vehicle flexibility to adjust operation to meet objectives. For example, if the driver seeks to reach the destination in minimum time, a high torque profile can be selected and maintained throughout a trip to provide maximum speed and acceleration capability. If, however, a greater concern is to conserve an on-board energy source for a relatively long trip, the high efficiency profile can be selected throughout, possibly with the user's selection of the high torque profile at various points on a limited basis. Reference is made to the ([identify]) application for a more detailed description of exemplified waveforms, particularly high efficiency, sinusoidal waveforms, and high torque, square wave shaped waveforms.

The variable conditions and changing requirements of vehicle operation, however, may call for a change in profile more frequently or rapidly than the driver can, or would desire to, keep pace with. A driver's torque requests may be adequately met with selection of the high efficiency profile mode except for relatively transient instances such as passing situations, uphill grades, etc.

In those instances, the driver may not be sufficiently responsive to the changing conditions to obtain optimum advantage of a change in selection from a high efficiency profile to a high torque profile. When the high torque requirement conditions diminish, return to the high efficiency profile may be delayed until the user realizes that the high torque profile is no longer necessary, thus drawing unnecessary current from the battery. Thus, it would be desirable to use the high torque mode only when torque greater than that available from the high efficiency mode is required.

The need remains for a system in which a motor control scheme is automatically selected on a dynamic basis to provide an appropriate energization current waveform profile.

A polyphase machine fed by a pulse-controlled AC converter is known from US 5,034,675, in which a polyphase machine is controlled between rectangular and sine-shaped waveforms in each half cycle according to the required torque.

Further, a system for driving a motor by a pulse width modulation inverter is known from US 4,333,042, according to which the system includes two-range driving characteristics, wherein the motor is driven by the pulse width modulation output having a simulated sine wave form at the speed lower than the base speed of the motor and by the pulse width modulation output having a rectangular wave form at the speed higher than the base speed of the motor.

Further, an electronically commutated reluctance motor is known from WO 90/11641, according to which a motor is provided with separate phases.

## Disclosure of the Invention

The object of the present invention is to provide a motor control system and corresponding method allowing automatically selecting a control scheme on a dynamic basis in accordance with criteria associated with monitored conditions.

The object is solved by the subject matter of the independent claims, advantageous embodiments are incorporated in the dependent claims.

The present invention fulfills this need by providing a plurality of motor control schemes for a motor drive, each of which can produce a unique motor energization current waveform profile. One or more conditions are monitored continuously throughout motor operation. One of the motor control schemes is automatically selected on a dynamic basis in accordance with criteria associated with the monitored conditions. The motor is energized in accordance with the selected motor control scheme with the appropriate current waveform profile. The present invention provides additional advantages in motors having ferromagnetically autonomous stator electromagnets.

The motor control schemes may comprise a high efficiency motor control scheme that provides a current waveform profile for relatively optimum operating efficiency and a high torque motor control scheme that provides a current waveform profile for relatively high operating torque response. The system is responsive to a user input signal that represents a torque request. The user input signal is sensed and the ability of the system to meet the torque request is monitored to select the appropriate motor control scheme accordingly. The ability of the system to meet torque request is a function of motor speed, which is continuously sensed to facilitate the torque demand monitoring function. The high efficiency motor control scheme is implemented unless the corresponding current waveform profile is unable to meet the torque demand; otherwise, the high torque motor control scheme is implemented.

The present invention may be manifested in a control system for a multiphase motor having a plurality of stator phase components, each stator phase component comprising a phase winding formed on a core element, and a permanent magnet rotor. Preferably, each of the stator core elements comprises ferromagnetic material separated from direct contact with the other core elements, each stator phase component thereby forming an autonomous electromagnet unit. Stator energization current is provided by a direct current power supply through circuitry coupled to a controller. The controller can access any of a plurality of stored motor control schemes to implement stator energization current having a corresponding waveform profile. The controller is dynamically responsive to one or more monitored conditions to effect selection of the motor control schemes. The stored motor control schemes are determinative of the current waveform profiles and, when accessed, are incorporated into controller operation. The motor control schemes may comprise, for example, an efficiency motor control scheme that provides a current waveform profile for relatively optimum operating efficiency, such as a substantially sinusoidal waveshape, and a high torque motor control scheme that provides a current waveform profile for a relatively high operating torque response, such as a substantially rectangular waveshape.

A user input is coupled to the controller from which a torque request signal is received. Another input to the controller receives a signal representing motor speed, derived from continuous sensing of rotor position. Based on these signals, the controller can derive the motor torque demands and the control voltages necessary to meet the torque demands on a real time basis. If the voltage required to sustain sinusoidal waveform profile mode exceeds the power supply voltage, then the controller selects the high torque profile mode operation, accessing the data therefor from the profile memory. As an alternative to repeated real time calculation for profile selection, a lookup table that correlates profile selection with torque request input and monitored speed may be stored in memory.

Additional advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention as defined by the appended claims. Accordingly, the drawings and description are to be regarded as illustrative in nature, and not as restrictive.

## Brief Description of Drawings

The present invention is illustrated by way of example, and not by way of limitation, in the figures of the accompanying drawing and in which like reference numerals refer to similar elements and in which:

> Fig. 1 is an exemplary view showing rotor and stator elements in a configuration that may be employed in the present invention.
> Fig. 2 is a block diagram of a motor control system in accordance with the present invention.
> Fig. 3 is a block diagram that illustrates torque controller methodology for use in the control system of Fig. 2.
> Fig. 4 is a flow chart for operation of the profile selection functionality in accordance with the present invention.
> Fig. 5 is a curve representing profile mode selection for ranges of torque and speed in accordance with the present invention.

## Detailed Description of the Invention

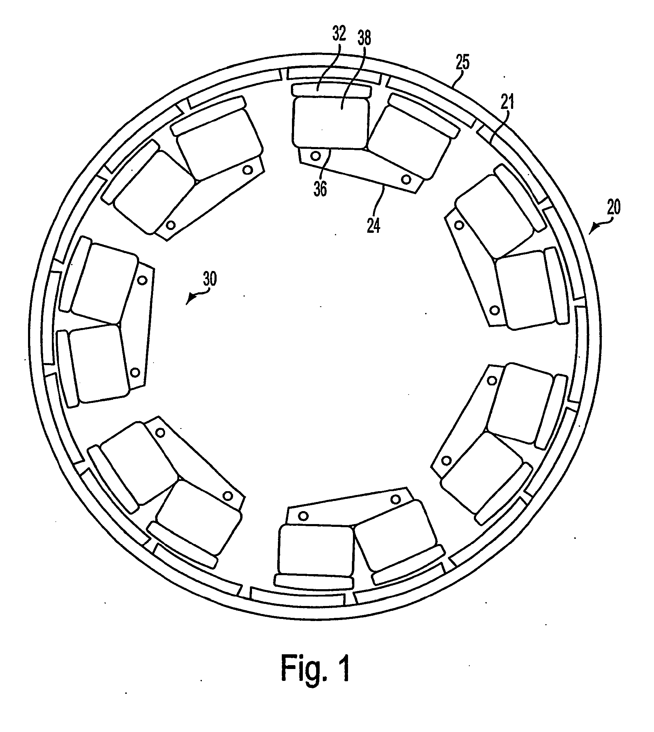

The present invention is applicable to a motor such as disclosed in the application US 2003-0193263 although the invention can be used with various other motors, including permanent magnet motors. Fig. 1 thus is an exemplary view showing rotor and stator elements as described in that application, the disclosure of which has been incorporated herein. Rotor member 20 is an annular ring structure having permanent magnets 21 substantially evenly distributed along cylindrical back plate 25. The permanent magnets are rotor poles that alternate in magnetic polarity along the inner periphery of the annular ring. The rotor surrounds a stator member 30, the rotor and stator members being separated by an annular radial air gap. Stator 30 comprises a plurality of electromagnet core segments of uniform construction that are evenly distributed along the air gap. Each core segment comprises a generally U-shaped magnetic structure 36 that forms two poles having surfaces 32 facing the air gap. The legs of the pole pairs are wound with windings 38, although the core segment may be constructed to accommodate a single winding formed on a portion linking the pole pair. Each stator electromagnet core structure is separate, and magnetically isolated, from adjacent stator core elements. The stator elements 36 are secured to a non-magnetically permeable support structure, thereby forming an annular ring configuration. This configuration eliminates emanation of stray transformer flux effects from adjacent stator pole groups. The stator electromagnets are thus autonomous units comprising respective stator phases. The concepts of the invention, more fully described below, are also applicable to other motor structures, including a unitary stator core that supports all of the phase windings.

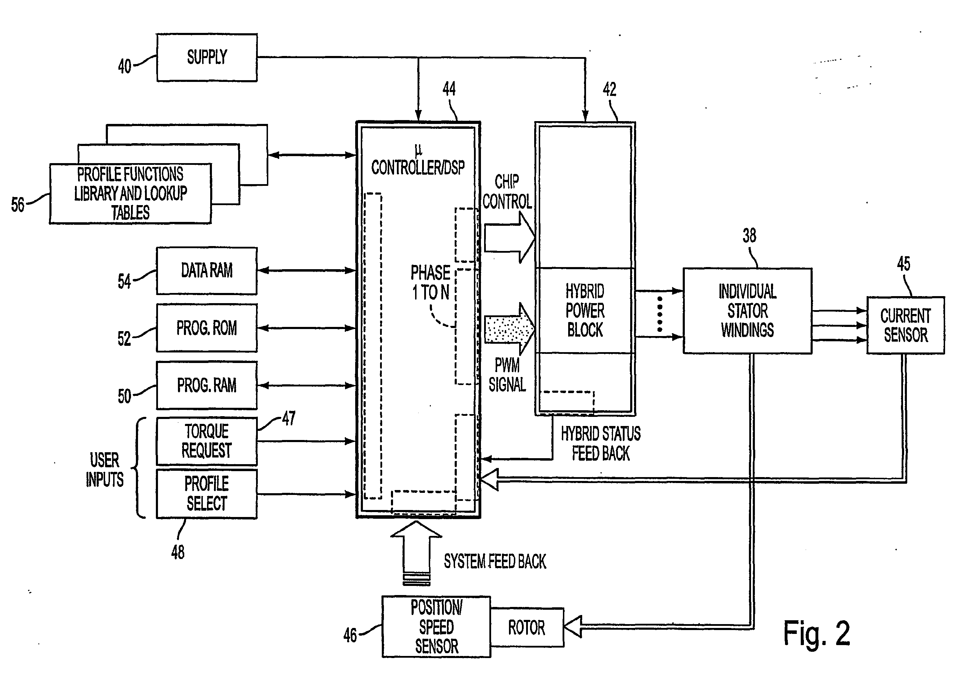

Fig. 2 is a block diagram of a motor control system in accordance with the present invention. A plurality of multiphase motor stator phase windings 38 are switchably energized by driving current supplied from d-c power source 40 via hybrid power block 42. The power block may comprise electronic switch sets that are coupled to controller 44 via a pulse width modulation converter and gate drivers. Each phase winding is connected to a switching bridge having control terminals connected to receive pulse modulated output voltages from the controller. Alternatively, the switching bridges and gate driver components may be replaced by amplifiers linked to the controller output voltages. Reference is made to the US 6,794,839 for a more detailed description of the winding power circuitry.

Current in each phase winding is sensed by a respective one of a plurality of current sensors 45 whose outputs are provided to controller 44. The controller may have a plurality of inputs for this purpose or, in the alternative, signals from the current sensors may be multiplexed and connected to a single controller input. Rotor position and speed sensor 46 provides rotor position and speed feedback signals to the controller. The sensor may comprise a well known resolver, encoder or their equivalents and a speed approximator that converts the position signals to speed signals in a well known manner. The controller is connected to the supply 40 by a primary power supply bus. The controller is also provided with user inputs, including a torque request input 47 and a profile selection input 48.

The controller may comprise a microprocessor or equivalent microcontroller, such as Texas Instrument digital signal processor TMS320LF2407APG. Coupled to the controller are program RAM memory 50, program ROM 52, DATA RAM 54 and profile memory 56. These illustrated units are merely representative of any well known storage arrangements by which the controller may access stored random data and program data. Profile memory 56 is shown separately in the drawing for purposes of illustration of the inventive concepts. The profile memory may comprise a ROM in which are stored the portions of the motor control scheme programs that dictate the motor current waveform profiles obtained with implementation of the associated control schemes. The profile memory data may be stored in the form of a profile functions library and/or lookup tables. The profile memory data structure can be in a form of real-time calculations and optimization routines. As an alternative, or in addition, to ROM, a unit can be provided that calculates values during real-time motor operation.

In the vehicle drive application example, the torque request input 47 represents torque required by the user's throttle. An increase in throttle is indicative of a command to increase speed, which can be realized by an increase in torque. Alternatively, it may be indicative of a command to increase torque in order to maintain the same speed of a vehicle under heavy load conditions, such as uphill driving. In operation, the control system torque tracking functionality should maintain steady state torque operation for any given torque request input through varying external conditions, such as changes in driving conditions, load gradient, terrain, etc., and should be responsive to changes at the torque request input to accommodate the driver's throttle commands. The manner in which the control system responds to torque input requests is dependent upon the particular motor control scheme implemented. A plurality of motor control schemes are available to obtain an appropriate response. Each control scheme effects a particular motor current waveform profile having unique characteristics with respect to efficiency, torque capacity, response capability, power losses, etc.

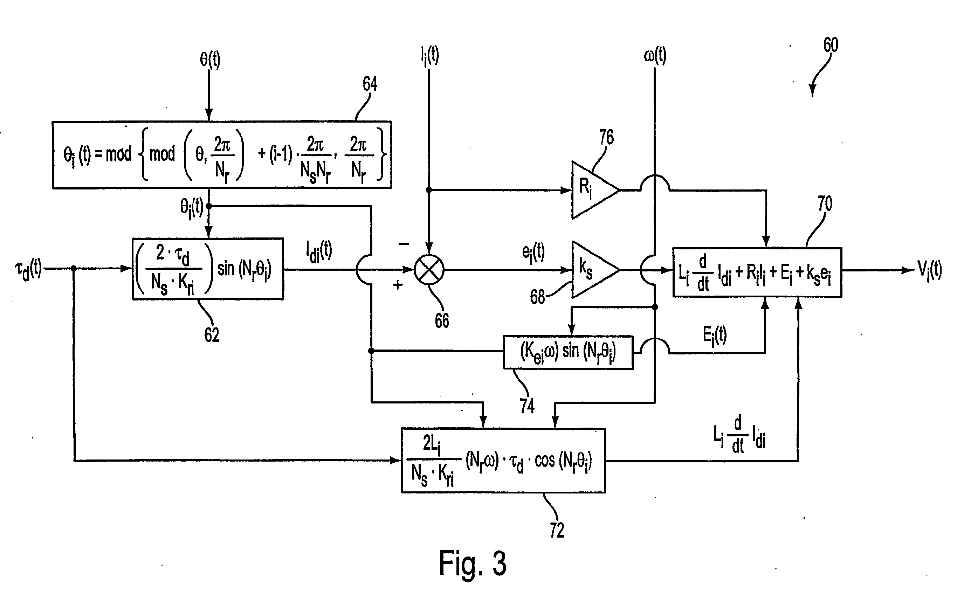

Fig. 3 is a block diagram that illustrates a motor control scheme utilized in the US 6,727,668. Reference is made to that application for detailed description of operation. In order to develop the desired phase currents the following per-phase voltage control expression is applied to the driver for the phase windings:

$$V_i(t) = L_i dI_{di}/dt + R_i I_i + E_i + k_s e_i$$

Fig. 3 represents the methodology, generally indicated by reference numeral 60, by which the controller derives the components of this voltage expression in real time, utilizing the torque request input and the signals received from phase current sensors, position sensor and speed detector. Functional block 70 represents the formulation and addition of the components of the above expression to obtain the control voltage in real time. Each of the functional blocks 62, 64, 66, 68, 72, 74 and 76, shown as inputs to block 70, represents the generation of the various elements of the components obtained from real time inputs received by the controller or parameter constants. Block 62 represents a precision torque tracking functionality, the per-phase desired current trajectories being selected according to the following expression:

$$I_{di} = \left( \frac{2\tau_d}{N_s K_{ti}} \right) \sin\left( N_r \theta_i \right)$$

where $I_{di}$ denotes per-phase desired current trajectory, $\tau_d$ denotes the user's requested torque command, $N_s$

represents the total number of phase windings, $K_{ti}$ denotes a per-phase torque transmission coefficient and $\theta_i$ represents rotor position signal for the $i^{th}$ phase. The per-phase current magnitude is dependent upon the per-phase value of the torque transmission coefficient $K_{ti}$.

In operation, controller 44 successively outputs control signals $V_i(t)$ to the hybrid power block for individual energization of respective phase windings in a sequence established in the controller. Each successive control signal $V_i(t)$ is related to the particular current sensed in the corresponding phase winding, the immediately sensed rotor position and speed, and also to model parameters, $K_{ei}$ and $K_{ri}$, that have been predetermined specifically for the respective phases. The computations illustrated in Fig. 3 are performed successively in real time. The expression shown in block 62 in this motor control scheme provides the desired current component for the tracking torque output control signal $V_i(t)$ with a sinusoidal waveform profile. The sine wave current trajectory $I_{sin}(t)$ is generated from the following equation

$$I_{sin} = I_m \sin\left( N_r \theta_i \right)$$

where $I_m$ denotes the phase current magnitude, $N_r$ denotes the number of permanent magnet pairs and $\theta_i$ denotes the measured per phase rotor position signal. As described in the US 6,794,839, this sinusoidal current waveform profile provides efficient motor operation.

Different expressions for block 62 can be used for the torque tracking functionality of Fig. 3 to obtain different current waveform profiles for manifesting other operational aspects, although sacrificing some of the efficiency achieved with the sinusoidal waveform profile. For higher torque operation, the expression of block 62 shown in Fig. 3 can be replaced with an expression yielding a square wave current waveform trajectory $I_{sq}(t)$, such as

$$I_{sq} = I_m \, \text{sgn}\left( \sin\left( N_r \theta_i \right) \right)$$

where sgn (x) denotes the standard signum function and is defined as 1 if x > 0, 0 if x = 0, and -1 if x < 0. Reference is again made to US 6,794,839 for a more detailed description comparing the efficiency and torque features of the two different current waveform profiles obtained from the motor control schemes discussed above.

Profile memory 56 stores data that are used by the controller to obtain the current values that satisfy the expressions exemplified above. For the square wave profile, the expression $L_i dI_{di}/dt$ may be prestored. The data may be stored as lookup tables in a profile functions library, each motor control scheme having a corresponding lookup table. Each entry in a lookup table represents a value of current, shown as the output of block 62 in Fig.

3, for a particular combination of torque request value and rotor position for the corresponding motor control scheme. If a control scheme is selected for which the sinusoidal waveform is produced, the corresponding profile memory data is accessed. Square wave profile memory data would be accessed if the corresponding control scheme is selected. Alternatively, the profile memory may store data for each profile with which the desired current value $I_{di}$ is repeatedly computed by the controller in real time. While expressions for sinusoidal and square wave waveforms have been set forth above for purposes of illustration, other waveform profiles, such as sawtooth, etc., may be utilized for different operational purposes.

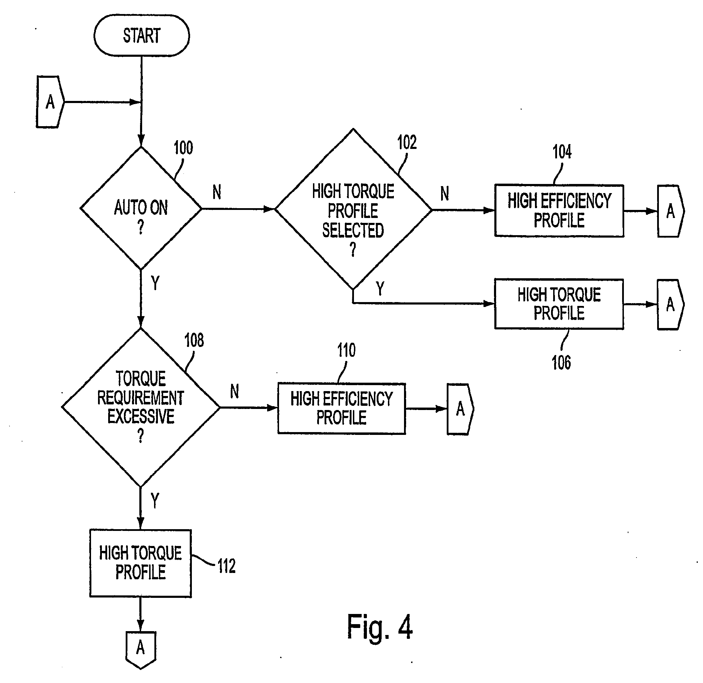

Selection of profile data can be made by the controller automatically as appropriate during motor operation. Alternatively, a user can select an operational mode corresponding to one of the profiles by inputting a profile selection signal at controller input 48. Profile selection operation is described with reference to the flow chart shown in Fig. 4. The description pertains to a specific example in which the profile memory contains data for implementing a high efficiency profile motor control scheme, such as a control scheme for producing a sinusoidal motor current waveform and for implementing a high torque profile, such as a control scheme for producing a square wave motor current waveform. This example is merely illustrative, as data for other profiles may be stored in the profile memory and accessed under operating conditions for which different current waveforms are appropriate.

In the absence of a profile select signal detected by the controller, an automatic profile selection mode is invoked. At step 100, the controller detects whether a user profile selection signal has been received at input 48 to determine whether the automatic mode is to be invoked. If the determination in step 100 is negative, the controller determines at step 102 whether the received profile select signal is a high torque profile selection. If not, the controller, after any appropriate delay, accesses the profile memory to retrieve data from the high efficiency profile lookup table at step 104. The retrieved data yields the desired current value $I_{di}$ for the instantaneous values of the torque request and the sensed rotor position levels. If, instead, the high torque profile has been selected, as determined in step 102, the corresponding lookup table is accessed at step 106 and the appropriate value of $I_{di}$ for this table is obtained. The process flow from both steps 104 and 106 returns to step 100 for determination of whether there is still a user profile selection received and the nature of such selection to continue in the above described manner. Operation at steps 104 and 106 occurs after the selection in step 102 for a period sufficiently long to overcome transient effects in profile changeover. Thus, an appropriate delay for return of the process flow to step 100 may extend for a number of successive feedback samplings.

If no user profile selection input signal is present and the system has not been switched off, the controller determines at step 100 that the waveform profile is to be automatically selected. In this automatic mode, determination is made by the controller at step 108 of whether or not the system, in the high efficiency profile motor control scheme, has the capability of meeting the torque tracking requirements for the user requested torque input. Such determination can be made with reference to the value of the controller $V_i(t)$ from the output of block 70 of Fig. 3 that would be derived from values of the user requested torque input and the motor speed. The torque demands can be met if the derived control voltages do not exceed the voltage level of the power supply. If the derived level of this output does not exceed the power supply voltage as determined in step 108, the controller can apply the voltage required by the high efficiency motor control scheme for torque tracking. The controller, after any appropriate delay, will then access the profile memory to retrieve data from the high efficiency profile lookup table at step 110. If, instead, the derived voltage level is higher than the power supply voltage, determination is made at step 108 that the power supply capacity is exceeded. The controller, after any appropriate delay, will then access the profile memory to retrieve data from the high torque profile lookup table at step 112. The process flow from both steps 110 and 112 returns to step 100 to continue in the above described manner. The delays discussed above are appropriate if operation is to change from one operational profile mode to another.

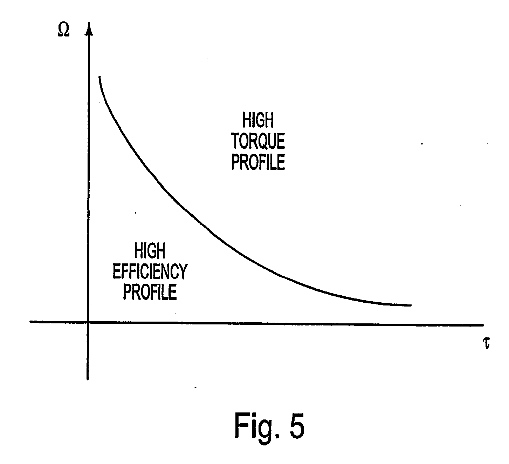

While the automatic mode profile selection represented by step 108 can be performed by repeated calculation of a torque capacity threshold on a real time basis, calculations of voltage for various combinations of torque request and motor speed can be made in advance and linked with the appropriate profile in a lookup table in the profile memory. Fig. 5 is a curve that represents a boundary in such a lookup table between ranges for high efficiency profile mode selection and high torque profile mode selection for values of torque and speed in accordance with the illustrated example. The lookup table is formulated by making the above described controller voltage/supply voltage comparison for a multitude of speed/requested torque combinations. With the abscissa of the graph representing speed and the ordinate representing requested torque, the curve is asymptotic to both axes with speed/torque combinations above the curve being beyond the capacity of the system to track torque in the high efficiency profile operational mode. The controller upon accessing this lookup table will select the high efficiency profile mode for speed/torque combinations represented by points below the curve and select the high torque profile mode for the remaining points.

In this disclosure there is shown and described only preferred embodiments of the invention and but a few examples of its versatility. It is to be understood that the invention is capable of use in various other combinations and environments and is capable of changes or modifications within the scope as defined by the appended claims. For example, various other current waveform profiles may be utilized. The profile memory thus may store a plurality of profiles accessible by the controller in response to receipt of specific profile selection commands. Various lookup tables of varying complexities can be formulated for appropriate profile mode selection by the controller.

**Claims**

1. A method for adaptive control of a multiphase motor comprising the steps of:

- identifying a plurality of motor control schemes for effecting respective different operating profiles, wherein the motor control schemes comprise a high efficiency motor control scheme that provides a current waveform profile for relatively optimum operating efficiency and a high torque motor control scheme that provides a current waveform profile for relatively high operating torque response;
- inputting a command representing a torque request;
- sensing the motor speed;
- selecting one of the motor control schemes; and generating motor control signals to provide motor energizing current from a power supply for an operating profile corresponding to the selected motor control scheme;

characterised in that the selecting step comprises:

- determining whether a threshold is exceeded based on the torque request and the motor speed; and
- accessing a stored motor control scheme, the motor control scheme accessed being dependent upon the determination made in the determining step.

2. A method as recited in claim 1, wherein the steps of sensing, selecting and generating are repeatedly performed throughout motor operation for adaptive control of the motor.

3. A method as recited in claim 1, wherein the relatively optimum operating efficiency current waveform profile has a substantially sinusoidal waveshape and the relatively maximum torque response current waveform profile has a substantially rectangular waveshape.

4. A method as recited in claim 1, wherein the torque motor control scheme is selected when the threshold is exceeded and the efficiency motor control scheme is selected when the threshold is not exceeded.

5. A method as recited in claim 1, wherein the threshold is the power supply voltage level and the determining step comprises deriving a control voltage required for operation using the efficiency motor control scheme.

6. A method as recited in claim 1, the determining step comprises accessing a lookup table having entries based on torque request and motor speed.

7. A method as recited in claim 1, wherein the motor stator comprises a plurality of ferromagnetically autonomous electromagnets, each electromagnet having wound thereon one of the phase windings.

8. A motor control system for a multiphase permanent magnet motor having a stator with a plurality of phase windings (38), said system comprising:

- energization circuitry (42) for providing energization current to the motor stator windings (38) from a power supply (40);
- a controller (44) coupled to the energization circuitry (42), the controller (44) having a plurality of inputs (47,48) including a torque request input (47) for receiving a user signal;
- storage means (50,52,54,56) coupled to the controller (44), the storage means (50,52,54,56) having stored therein a plurality of different motor control schemes for respectively effecting different stator current waveform profiles, wherein said stored motor control schemes comprise an efficiency motor control scheme that provides a current waveform profile for relatively optimum operating efficiency and a high torque motor control scheme that provides a current waveform profile for a relatively high operating torque response;
- motor speed sensing means (46) coupled to one input of the controller;

characterised in that the controller (44) is dynamically responsive to the motor speed sensing means (46) to access the motor control schemes from the storage means (50,52,54,56) to energize the motor with corresponding current waveform profiles in accordance with a threshold dependent upon a signal received at the torque request input (47) and a signal received from the motor speed sensing means (46).

9. A motor control system as recited in claim 8, wherein the relatively optimum operating efficiency current waveform profile has a substantially sinusoidal waveshape and the relatively maximum torque response current waveform profile has a substantially rectangular waveshape.

10. A motor control system as recited in claim 8, wherein the high torque motor control scheme is accessed when the threshold is exceeded and the efficiency motor control scheme is accessed when the threshold is not exceeded.

11. A motor control system as recited in claim 8, wherein the storage means (50,52,54,56) comprises a lookup table having entries based on torque request and motor speed, each entry designating one of the motor control schemes.

12. A motor control system as recited in claim 8, wherein the motor stator comprises a plurality of ferromagnetically autonomous electromagnets, each electromagnet having wound thereon one of the phase windings.

**Patentansprüche**

1. Verfahren zum adaptiven Steuern eines Multiphasen-Motors, die Schritte umfassend:

- Identifizieren einer Vielzahl von Motorsteuerprogrammen zum Ausführen jeweiliger verschiedener Anwendungsprofile, in dem die Motorsteuerprogramme ein hocheffizientes Motorsteuerprogramm umfassen, das ein Stromwellenformprofil für eine relative optimale Betriebseffizienz bereitstellt und ein Steuerprogramm für ein hohes Drehmoment, das ein Stromwellenformprofil für eine relativ hohe Drehmomentoperationsantwort bereitstellt;
- Eingeben einer Anweisung, die eine Drehmomentabfrage darstellt;
- Abtasten der Motorgeschwindigkeit;
- Auswählen eines der Motorsteuerprogramme; und
- Erzeugen von Motorsteuersignalen zum Bereitstellen von Motorregerstrom von einer Energieversorgung für ein Betriebsprofil, welches dem ausgewählten Motorsteuerprogramm entspricht;

**dadurch gekennzeichnet, dass** der Auswahlschritt umfasst:

- Festlegen, ob ein Grenzbereich überschritten wird, basierend auf der Drehmomentabfrage und der Motorgeschwindigkeit; und
- Aufrufen eines abgespeicherten Motorsteuerprogramms, wobei das abgerufene Motorsteuerprogramm abhängig von der Festlegung ist, die im Festlegungsschritt getroffen wurde.

2. Verfahren nach Anspruch 1, in dem die Schritte des Abfragens, Auswählens und Erzeugens während des Motorbetriebs zum adaptiven Regeln des Motors wiederholt durchgeführt werden.

3. Verfahren nach Anspruch 1, in das Stromwellenformprofil der relativen optimalen Betriebseffizienz eine im Wesentlichen sinusförmige Wellenform hat und das Stromwellenformprofil der relativen maximalen Drehmomentabfrage eine im Wesentlichen rechtwinklige Wellenform hat.

4. Verfahren nach Anspruch 1, in dem das Drehmomentmotorsteuerprogramm ausgewählt wird, wenn der Grenzwert überschritten wird und das effiziente Motorsteuerprogramm ausgewählt wird, wenn der Grenzwert nicht überschritten wird.

5. Verfahren nach Anspruch 1, in dem der Grenzwert der Energieversorgungsspannungspegel ist und der Festlegungsschritt das Ableiten einer Steuerspannung umfasst, die für den Betrieb benötigt wird, der das Effizienzmotorsteuerprogramm verwendet.

6. Verfahren nach Anspruch 1, wobei der Festlegungsschritt das Abrufen einer Tabelle umfasst, die auf der Drehmomentabfrage und der Motorgeschwindigkeit basierende Einträge hat.

7. Verfahren nach Anspruch 1, in dem der Motorstator eine Vielzahl von ferrogmagnetischen unabhängigen Elektromagneten umfasst, wobei jeder Elektromagnet eine der Phasenwicklungen hat, die auf diesen gewunden ist.

8. Motorsteuersystem für einen Mehrphasenpermanentmagnetmotor, der einen Stator mit einer Vielzahl von Phasenwicklungen (38) hat, wobei das System umfasst:

- Energiekreislauf (42) zum Bereitstellen eines Erregerstroms für die Motorstatorwicklungen (38) von einer Energieversorgung (40);
- eine Steuerung (44), die an den Energiekreislauf (42) gekoppelt ist, wobei die Steuerung (44) eine Vielzahl von Eingängen (47, 48) hat, die einen Drehmomentabfrageeingang (47) zum Erhalten eines Benutzersignals umfasst;
- Speichermittel (50, 52, 54, 56), die mit der Steuerung (44) gekoppelt sind, wobei in den Speichermitteln (50, 52, 54, 56) eine Vielzahl von verschiedenen Motorsteuerprogrammen gespeichert sind, zum jeweiligen Ausführen verschiedener Statorstromwellenformprofile, in denen die gespeicherten Motorsteuerprogramme ein Effizienzmotorsteuerprogramm, das ein Stromwellenformprofil für eine relative optimale Betriebseffizienz bereitstellt, und ein Hochdrehmomentmotorsteuerprogramm umfassen, das ein Stromwellenformprofil für eine relative Hochbetriebsdrehmomentantwort bereitstellt;

- Motorgeschwindigkeitsabfragemittel (46), die mit einem Eingang der Steuerung gekoppelt sind;

**dadurch gekennzeichnet, dass**
die Steuerung (44) dynamisch auf die Motorgeschwindigkeitsabfragemittel (46) reagiert, um die Motorsteuerprogramme von den Speichermitteln (50, 52, 54, 56) abzurufen, um den Motor mit dem entsprechenden Stromwellenformprofil in Übereinstimmung mit einem Grenzwert zu erregen, der von einem Signal abhängt, das an dem Drehmomentabfrageeingang (47) erhalten wird, und einem Signal, das von den Motorgeschwindigkeitsabfragemitteln (46) erhalten wird.

9. Motorsteuersystem nach Anspruch 8, in dem das Stromwellenprofil der relativen optimalen Betriebseffizienz eine im Wesentlichen sinusförmige Wellenform hat und das Stromwellenprofil der maximalen Drehmomentantwort eine im Wesentlichen rechteckige Wellenform hat.

10. Motorsteuersystem nach Anspruch 8, in dem das Hochdrehmomentmotorsteuerprogramm abgerufen wird, wenn der Grenzwert überschritten wird und das Effizienzmotorsteuerprogramm abgerufen wird, wenn der Grenzwert nicht überschritten wird.

11. Motorsteuersystem nach Anspruch 8, in dem die Speichermittel (50, 52, 54, 56) eine Tabelle umfassen, die auf der Drehmomentabfrage und der Motorgeschwindigkeit basierende Einträge hat, wobei jeder Eintrag eines der Motorsteuerprogramme bestimmt.

12. Motorsteuersystem nach Anspruch 8, in dem der Motorstator eine Vielzahl von ferromagnetischen unabhängigen Elektromagneten umfasst, wobei jeder Elektromagnet eine der Phasenwicklungen hat, die auf diesen gewunden ist.

**Revendications**

1. Procédé de commande adaptative d'un moteur multiphasé comprenant les étapes suivantes :

identification d'une pluralité de schémas de commande du moteur destinés à réaliser différents profils opérationnels respectifs, dans lequel les schémas de commande du moteur comprennent un schéma de commande du moteur haut rendement qui procure un profil de forme d'onde de courant pour un rendement opérationnel relativement optimal et un schéma de commande du moteur à couple élevé qui procure un profil de forme d'onde de courant pour une réponse de couple opérationnel relativement élevé ;
entrée d'une commande représentant une requête de couple ;
détection du régime moteur ;
sélection de l'un des schémas de commande du moteur ; et génération de signaux de commande du moteur pour fournir un courant d'alimentation au moteur depuis un bloc d'alimentation pour un profil opérationnel correspondant au schéma de commande du moteur sélectionné ;

**caractérisé en ce que** l'étape de sélection comprend :

la détermination si un seuil est ou non dépassé sur la base de la requête de couple et du régime moteur ; et
l'accès à un schéma de commande du moteur stocké, le schéma de commande du moteur accédé dépendant de la détermination faite lors de l'étape de détermination.

2. Procédé selon la revendication 1, dans lequel les étapes de détection, sélection et génération sont exécutées de manière répétée tout au long du fonctionnement du moteur pour une commande adaptative du moteur.

3. Procédé selon la revendication 1, dans lequel le profil de forme d'onde de courant pour un rendement opérationnel "relativement optimal présente une forme d'onde sensiblement sinusoïdale et le profil de forme d'onde de courant pour une réponse de couple relativement maximum présente une forme d'onde sensiblement rectangulaire.

4. Procédé selon la revendication 1, dans lequel le schéma de commande du couple du moteur est sélectionné quand le seuil est dépassé et le schéma de commande du rendement du moteur est sélectionné quand le seuil n'est pas dépassé.

5. Procédé selon la revendication 1, dans lequel le seuil est le niveau de tension du bloc d'alimentation et l'étape de détermination comprend la dérivation d'une tension de commande requise pour le fonctionnement en utilisant le schéma de commande du rendement du moteur.

6. Procédé selon la revendication 1, dans lequel l'étape de détermination comprend l'accès à une table de conversion comportant des entrées basées sur une requête de couple et un régime moteur.

7. Procédé selon la revendication 1, dans lequel le stator du moteur comprend une pluralité d'électroaimants autonomes d'un point de vue ferromagnétique, chaque électroaimant ayant enroulé sur celui-ci l'un des enroulements de phase.

8. Système de commande de moteur pour un moteur à aimant permanent multiphasé possédant un stator muni d'une pluralité d'enroulements de phase (38), ledit système comprenant :

    un circuit d'alimentation (42) destiné à fournir un courant d'alimentation aux enroulements (38) du stator du moteur depuis un bloc d'alimentation (40) ;
    une unité de commande (44) couplée au circuit d'alimentation (42), l'unité de commande (44) possédant une pluralité d'entrées (47, 48) incluant une entrée de requête de couple (47) destinée à recevoir un signal d'utilisateur;
    un moyen de stockage (50, 52, 54, 56) couplé à l'unité de commande (44), le moyen de stockage (50, 52, 54, 56) comportant stocké dans celui-ci une pluralité de différents schémas de commande du moteur destinés à réaliser respectivement différents profils de forme d'onde de courant du stator, dans lequel lesdits schémas de commande du moteur stockés comprennent un schéma de commande du rendement du moteur qui procure un profil de forme d'onde du courant pour un rendement opérationnel relativement optimal et un schéma de commande du moteur pour un couple élevé qui procure un profil de forme d'onde de courant pour une réponse de couple opérationnel relativement élevé ;
    un moyen de détection du régime moteur (46) couplé à une entrée de l'unité de commande ; **caractérisé en ce que** l'unité de commande (44) répond de manière dynamique au moyen de détection du régime moteur (46) pour accéder aux schémas de commande du moteur depuis le moyen de stockage (50, 52, 54, 56) pour alimenter le moteur avec des profils de forme d'onde de courant correspondants en fonction d'un seuil dépendant d'un signal reçu à l'entrée de requête de couple (47) et d'un signal reçu depuis le moyen de détection du régime moteur (46).

9. Système de commande de moteur selon la revendication 8, dans lequel le profil de forme d'onde de courant pour un rendement opérationnel relativement optimal présente une forme d'onde sensiblement sinusoïdale et le profil de forme d'onde de courant pour une réponse de couple relativement maximum présente une forme d'onde sensiblement rectangulaire.

10. Système de commande de moteur selon la revendication 8, dans lequel le schéma de commande du moteur pour un couple élevé est accédé quand le seuil est dépassé et le schéma de commande du rendement moteur est accédé quand le seuil n'est pas dépassé.

11. Système de commande de moteur selon la revendication 8, dans lequel le moyen de stockage (50, 52, 54, 56) comprend une table de conversion comportant des entrées basées sur une requête de couple et un régime moteur, chaque entrée désignant l'un des schémas de commande du moteur.

12. Système de commande de moteur selon la revendication 8, dans lequel le stator du moteur comprend une pluralité d'électroaimants autonomes d'un point de vue ferromagnétique, chaque électroaimant comportant enroulé sur celui-ci l'un des enroulements de phase.

Fig. 1

Fig. 2

Fig. 3

EP 1 522 141 B1

START

100 AUTO ON ?

102 HIGH TORQUE PROFILE SELECTED ?

104 HIGH EFFICIENCY PROFILE

106 HIGH TORQUE PROFILE

108 TORQUE REQUIREMENT EXCESSIVE ?

110 HIGH EFFICIENCY PROFILE

112 HIGH TORQUE PROFILE

A

N

Y

Fig. 4

Fig. 5

EP 1 522 141 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6727668 B
- US 6794839 B
- US 5034675 A
- US 4333042 A
- WO 9011641 A
- US 20030193263 A